**Europäisches Patentamt**

**European Patent Office**

**Office européen des brevets**

(11) Veröffentlichungsnummer: **0 044 531**
**A1**

# (12) EUROPÄISCHE PATENTANMELDUNG

(21) Anmeldenummer: **81105580.5**

(22) Anmeldetag: **16.07.81**

(51) Int. Cl.³: **F 16 H 41/06**
**B 60 K 41/22**

(30) Priorität: **18.07.80 DE 3027218**

(43) Veröffentlichungstag der Anmeldung:
**27.01.82 Patentblatt 82/4**

(84) Benannte Vertragsstaaten:
**FR GB IT**

(71) Anmelder: **Hanomag Gesellschaft mit beschränkter Haftung**
**Hanomagstrasse 9**
**D-3000 Hannover 91(DE)**

(72) Erfinder: **Reimann, Paul**
**Altenheimstrasse 21**
**D-7920 Heidenheim(DE)**

(72) Erfinder: **Kiel, Claus**
**Brahmsweg 32**
**D-3013 Barsinghausen 1(DE)**

(74) Vertreter: **Patentanwälte Dipl.-Ing. Rudolf Bibrach**
**Dipl.-Ing. Elmar Rehberg**
**Bibrach und Rehberg Postfach 7 38**
**D-3400 Göttingen(DE)**

(54) **Steuervorrichtung für einen Fahrzeugantrieb.**

(57) Steuervorrichtungen für einen Fahrzeugantrieb mit Antriebsmotor, Lastschaltgetriebe und einem dazwischengeschalteten, mit verstellbaren Leitradschaufeln oder einer Modulationskupplung arbeitenden Drehmomentwandler, der über ein vom Lastschaltgetriebedruck beaufschlagtes Steuergerät verstellt wird, sollen einfach im Aufbau und betriebssicher sein und eine kurze Rutschzeit mit nur geringem Wärmeanstieg aufweisen. Dies wird hier dadurch erreicht, daß der Stellmotor für den Drehmomentwandler und das Lastschaltgetriebe (1) in jeweils einen Hydraulikkreis (4, 8) liegen und in dem Lastschaltgetriebekreis ein hydraulisch beaufschlagtes Steuergerät (6), eingeschlossen ist, welches gleichzeitig den Durchlauf des Druckmittels durch den Stellmotorkreis (20) steuert.

./...

Croydon Printing Company Ltd.

Fig.1

# BIBRACH & REHBERG

## ANWALTSSOZIETÄT

BIBRACH & REHBERG, POSTFACH 738, D-3400 GÖTTINGEN

PATENTANWALT DIPL.-ING. RUDOLF BIBRACH
PATENTANWALT DIPL.-ING. ELMAR REHBERG

EUROPEAN PATENT ATTORNEYS
MANDATAIRES EN BREVETS EUROPÉENS

TELEFON: (0551) 45034/35

TELEX: 96616 bipat d

POSTSCHECKKONTO: HANNOVER
(BLZ 25010030) NR. 115763-301

BANKKONTEN: DEUTSCHE BANK AG GÖTTINGEN
(BLZ 26070072) NR. 01/85900
COMMERZBANK GÖTTINGEN
(BLZ 26040030) NR. 6425722

| IHR ZEICHEN<br>YOUR REF.<br>VOTRE REF. | IHR SCHREIBEN VOM<br>YOUR LETTER<br>VOTRE LETTRE | UNSER ZEICHEN<br>OUR REF.<br>NOTRE REF. | D-3400 GÖTTINGEN,<br>PÜTTERWEG 6 |
|---|---|---|---|
| | | 4375.20/k4 | 18.06.1981 |

Hanomag Gesellschaft mit beschränkter Haftung,
Hanomagstraße 9, D - 3000 Hannover 91

Steuervorrichtung für einen Fahrzeugantrieb

Die Erfindung betrifft eine Steuervorrichtung für einen Fahrzeugantrieb mit Antriebsmotor, Lastschaltgetriebe und einem dazwischengeschalteten, mit verstellbaren Leitradschaufeln oder einer Modulationskupplung arbeitenden Drehmomentwandler, der über ein vom Lastschaltgetriebedruck beaufschlagtes Steuergerät verstellt wird. Insbesondere soll die Erfindung Anwendung finden bei Fahrzeugen und Maschinen zur Erdbewegung.

Steuervorrichtungen im Sinne des Oberbegriffes sind bereits durch die DE-OS 1 555 965 und 2 126 910 bekanntgeworden. Sie haben den Mangel eines außerordentlich komplizierten Aufbaus und erfüllen nicht die Forderungen, die insbesondere von Arbeitsmaschinen mit Gleisketten zu erfüllen sind. Solche Maschinen werden zur Erzielung der optimalen Antriebsleistung ständig mit Vollgas gefahren. Dabei wird trotz des maximal abgegebenen Abtriebsmomentes von der Antriebskonzeption her ein weiches Schalten der Gänge für den Bediener der Arbeitsmaschine verlangt. Außerdem besteht die Forderung nach einem zentimetergenauen Heranfahren an das Ladegut bei maximalem Motorabtriebsmoment. Dies wird durch den Einsatz eines hydrodynamischen Drehmomentwandlers mit einem verstellbaren Leitrad, einem sog. Stellwandler oder mit einem hydrodynamischen Drehwandler mit einer modulierenden Kupplung erreicht, wobei das Wandlerturbinenmoment entsprechend dem gewünschten Maschinenvortriebsmoment dosiert wird. In der Praxis erfolgt die Steuerung von dem Maschinenbremspedal aus, wobei vor dem Bremspunkt der Steuerweg für die Regelung des Wandlerturbinenmoments benutzt wird. Wenn ein Lastschaltgetriebe Anwendung findet, welches ohne große Stoßbelastung für Material und Maschinenführer arbeiten soll, so zeigt sich der Mangel, daß durch den langsamen Druckaufbau gemäß der US-PS 2 649 688 der Steuerflüssigkeit in den Lamellenkupplungen den Lamellen eine längereRutschzeit vorgegeben wird, was einen übernormal großen Anstieg der Reibungswärme zur Folge hat. Um diese zu beherrschen, muß man vornherein eine größer zu dimensionierende Kupplungsausführung angewendet werden.

Die Erfindung hat es sich zur Aufgabe gemacht, diesen Mangel zu beheben. Erfindungsgemäß wird durch Zuhilfenahme der Stellwandlerverstellung bzw. eines Lüftens der Wandlermodulationskupplung im Augenblick des Gangwechsels die Möglichkeit geschaffen, die Lastschaltgetriebekupplungen kleiner auszuführen und somit den gesamten Antrieb in seiner Herstellung zu verbilligen. Der Stellmotor für den Drehmomentwandler und das Lastschaltgetriebe liegen in
jeweils einem Hydraulikkreis, während in dem Lastschaltgetriebe ein hydraulisch beaufschlagtes Steuergerät
eingeschlossen ist, welches gleichzeitig den Durchlauf
des Druckmittels durch den Stellmotorkreis steuert.

Vorzugsweise sind in dem Steuergerät ein Vorsteuerkolben und ein Arbeitskolben vorgesehen, wobei der Vorsteuerkolben vom Druck in der vom Lastschaltgetriebe
kommenden Steuerleitung beaufschlagt ist und in Abhängigkeit
hiervon den Durchfluß des von der Pumpe kommenden Druckmittels nach dem Arbeitskolben steuert, der seinerseits
den Druck im Stellmotorkreis regelt.

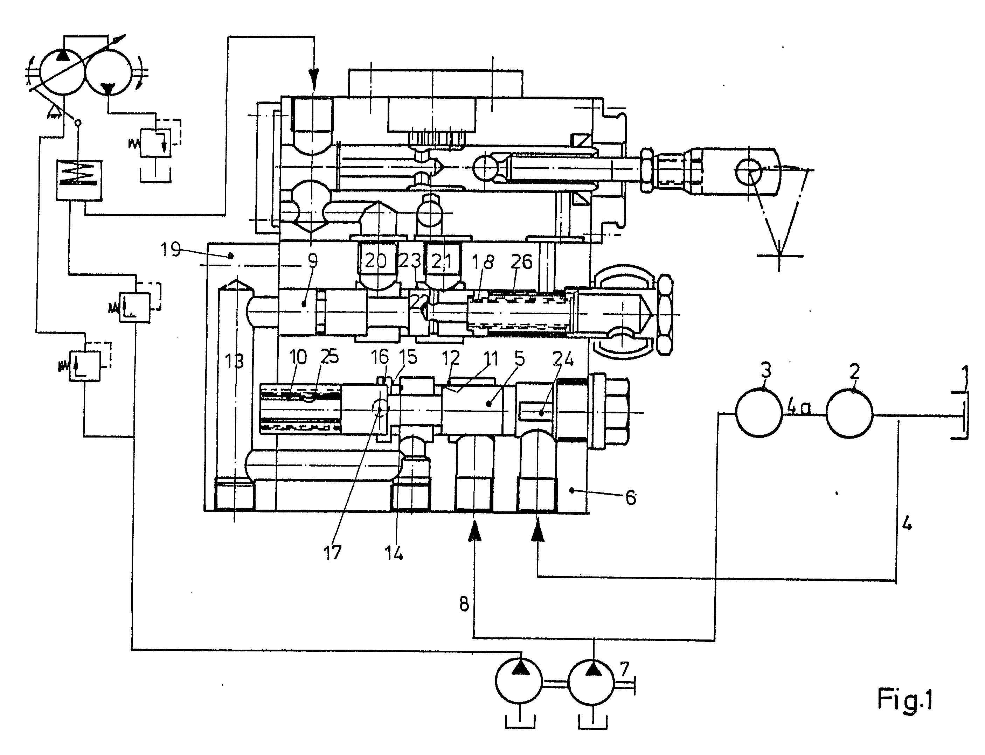

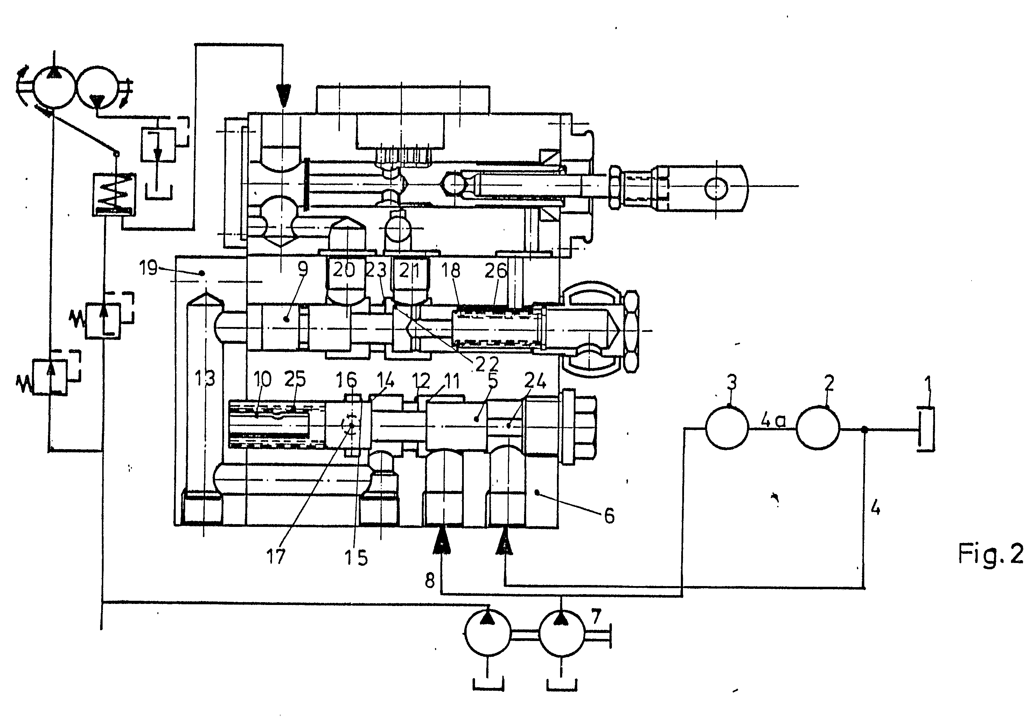

Der Erfindungsgedanke läßt die verschiedensten Ausführungsmöglichkeiten zu. Eine davon ist in den Fig. 1 und 2 der
beigefügten Zeichnungen in verschiedenen Arbeitsstellungen
schematisch wiedergegeben.

Die Lamellenkupplungen 1 werden von einem vom Maschinenführer bedienten Schaltsteuergerät 2, wie es im einzelnen
in der DE-OS 2 126 910 beschrieben und dargestellt ist,
angesteuert und der Kupplungskolben-Druckverlauf von einem
Druckregelventil 3 (US-PS 2 649 688) geregelt. Dieser
Druckverlauf wird über die Leitung 4 zur Steuerung der
hydraulischen Schaltvorrichtung für den hydrodynamischen
Drehmomentwandler genutzt, der einen Vorsteuerkolben 5
im Hydraulikgehäuse 6 beeinflußt. Dieser wiederum steuert
den direkt von der Pumpe 7 über die Leitung 8 wirkenden
Arbeitsdruck auf den Arbeitskolben 9.

Die Funktion dieser Hydrauliksteuerung ist vom notwendigen
zeitlichen Ablauf nur gewährleistet, wenn - wie beschrieben -
der Arbeitsdruck für den Arbeitskolben 9 direkt von der Pumpe zugeführt wird.

In Fig. 1 ist die Schaltvorrichtung beim Fahrzustand, wenn die Lamellenkupplung geschaltet ist, wiedergegeben. Die Kupplung 1 ist geschlossen und maximaler Druck, geregelt vom Druckventil 3, in Leitung 4 und 4a. Der Vorsteuerkolben 5 ist in Endlage gegen den Anschlag 10 geschoben. Die Steuerkante 11 vom Vorsteuerkolben 5 verschließt über die Steuerkante 12 im Gehäuse 6 dem Arbeitsdruck aus der Leitung 8 den Zugang zur Leitung 13. Hydrauliköl in der Leitung 13 fließt über die Steuerkanten 14 und 15 in den Kanal 16 und die Bohrung 17 in den Lastschaltgetriebesumpf. Der Arbeitskolben 9 ist durch eine Druckfeder 18 an den Ölzuführungsdeckel 19 angelegt und trennt den Stellmotor- bzw. Modulationsventil-Systemdruck von der Leitung 20 nach Leitung 21 zum Wandlergetriebesumpf über die Steuerkanten 22 im Arbeitskolben 9 und 23 im Gehäuse 6. Das maximal mögliche Wandlerabtriebsmoment wird über die geschlossene Lamellenkupplung 1 weitergeleitet.

Beim Gang- oder Richtungswechsel gemäß Fig. 2 ist die Kupplung 1 geöffnet, der Druckabfall auf Minimum, geregelt vom Druckregelventil 3 in den Leitungen 4 und 4a. Der Vorsteuerkolben 5 ist in Endlage gegen den Anschlag 24 durch die Druckfeder 25 geschoben. Die Steuerkante 11 gibt Arbeitsdruck aus der Leitung 8 über die Steuerkante 12 frei zur Leitung 13. Dadurch erfolgt ein Verschieben des Arbeitskolbens 9 gegen die Druckfeder 18 bis zur Anlage 26 und damit übertritt des Stellmotor- bzw. Modulationsventil-Systemdrucks von der Leitung 20 über die Steuerkanten 22 und 23 in die Leitung 21 zum Wandlergetriebesumpf.

Dadurch wird das Turbinenabtriebsmoment auf ein Minimum reduziert und die Lamellenkupplung 1 mit dem entsprechend geringen Moment belastet, was sich in geringer Reibungswärme in der Lamellenkupplung zeigt.

# BIBRACH & REHBERG

0044531

ANWALTSSOZIETÄT

BIBRACH & REHBERG, POSTFACH 738, D-3400 GÖTTINGEN

PATENTANWALT DIPL.-ING. RUDOLF BIBRACH
PATENTANWALT DIPL.-ING. ELMAR REHBERG

EUROPEAN PATENT ATTORNEYS
MANDATAIRES EN BREVETS EUROPEENS

TELEFON: (0551) 45034/35

TELEX: 96616 bipat d

POSTSCHECKKONTO: HANNOVER
(BLZ 25010030) NR. 115763-301

BANKKONTEN:  DEUTSCHE BANK AG GÖTTINGEN
(BLZ 26070072) NR. 01/85900
COMMERZBANK GÖTTINGEN
(BLZ 26040030) NR. 6425722

| IHR ZEICHEN YOUR REF. VOTRE REF. | IHR SCHREIBEN VOM YOUR LETTER VOTRE LETTRE | UNSER ZEICHEN OUR REF. NOTRE REF. | D-3400 GÖTTINGEN, PÜTTERWEG 6 |
|---|---|---|---|
| | | 4375.20/k4 | 18.06.1981 |

Hanomag Gesellschaft mit beschränkter Haftung,
Hanomagstraße 9, D - 3000 Hannover 91

Steuervorrichtung für einen Fahrzeugantrieb

P a t e n t a n s p r ü c h e :
--------------------------------------

1. Steuervorrichtung für einen Fahrzeugantrieb mit Antriebsmotor, Lastschaltgetriebe und einem dazwischengeschalteten,
mit verstellbaren Leitradschaufeln oder einer Modulationskupplung arbeitenden Drehmomentwandler, der über ein vom Lastschaltgetriebedruck beaufschlagtes Steuergerät verstellt wird,
dadurch gekennzeichnet, daß der Stellmotor für den Drehmomentwandler und das Lastschaltgetriebe in jeweils einem Hydraulikkreis liegen und in dem Lastschaltgetriebekreis ein hydraulisch
beaufschlagtes Steuergerät eingeschlossen ist, welches gleichzeitig den Durchlauf des Druckmittels durch den Stellmotorkreis
steuert.

0044531

- 2 -

2. Steuervorrichtung nach Anspruch 1, dadurch gekennzeichnet, daß in dem Steuergerät ein Vorsteuerkolben (5) und ein Arbeitskolben (9) vorgesehen sind, wobei der Vorsteuerkolben vom Druck in der vom Lastschaltgetriebe kommenden Steuerleitung (4) beaufschlagt ist und in Abhängigkeit hiervon den Durchfluß des von der Pumpe (7) kommenden Druckmittels nach dem Arbeitskolben (9) steuert, der seinerseits den Druck im Stellmotorkreis regelt.

0044531

1/2

Fig.1

Fig.2

Europäisches
Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 673 799 (AUDIFFRED)<br>* Spalten 2,3; Figuren * | 1 |
| | -- | |
| X | US - A - 4 187 739 (HAMMA)<br>* Spalte 3; Figuren * | 1 |
| | -- | |
| A | US - A - 3 915 274 (UTTER) | 1 |
| A | US - A - 3 286 541 (DEARNLEY) | 1 |
| D | DE - A - 1 555 965 (HARVESTER) | 1 |
| D | DE - A - 2 126 910 (HANOMAG) | 1 |
| D | US - A - 2 649 688 (SLOMER) | 1 |
| | ---- | |

**KLASSIFIKATION DER ANMELDUNG (Int. Cl.³)**

F 16 H 41/06
B 60 K 41/22

**RECHERCHIERTE SACHGEBIETE (Int. Cl.³)**

F 16 H 41/00
       47/00
B 60 K 41/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde
    liegende Theorien oder
    Grundsätze
E: kollidierende Anmeldung
D: in der Anmeldung angeführtes
    Dokument
L: aus andern Gründen
    angeführtes Dokument
&: Mitglied der gleichen Patent-
    familie, übereinstimmendes
    Dokument

Der vorliegende Recherchenbericht wurde fur alle Patentansprüche erstellt.

| Recherchenort | Abschlußdatum der Recherche | Prüfer |
|---|---|---|
| Den Haag | 26-10-1981 | FLORES |

EPA form 1503.1   06.78